# EUROPÄISCHE PATENTSCHRIFT

(11) **EP 2 539 173 B1**
(45) Veröffentlichungstag und Bekanntmachung des Hinweises auf die Patenterteilung: **17.06.2015**
(21) Anmeldenummer: 11702223.6
(22) Anmeldetag: 04.02.2011
(51) Int. Cl.: B60L 11/18

(54) **SCHALTUNGSANORDNUNG ZUM LADEN VON FAHRZEUGBATTERIEN IN EINEM FAHRZEUG UND ZUGEHÖRIGES VERFAHREN**
CIRCUIT ARRANGEMENT FOR THE CHARGING OF VEHICLE BATTERIES IN A VEHICLE AND ASSOCIATED METHOD
CIRCUITERIE PERMETTANT DE CHARGER DES BATTERIES DE VÉHICULE ÉQUIPANT UN VÉHICULE ET PROCÉDÉ AFFÉRENT

(30) Priorität: 25.02.2010 DE 102010002318
(43) Veröffentlichungstag der Anmeldung: 02.01.2013
(73) Patentinhaber: Siemens Aktiengesellschaft, 80333 München (DE)
(72) Erfinder: GÖTZE, Thomas, 09113 Chemnitz (DE)
(86) Internationale Anmeldenummer: PCT/EP2011/051654
(87) Internationale Veröffentlichungsnummer: WO 2011/104101

(56) Entgegenhaltungen:
- EP-A1- 0 603 778
- US-A1- 2010 013 438
- SUL S-K ET AL: "AN INTEGRAL BATTERY CHARGER FOR FOUR-WHEEL DRIVE ELECTRIC VEHICLE", IEEE TRANSACTIONS ON INDUSTRY APPLICATIONS, IEEE SERVICE CENTER, PISCATAWAY, NJ, US, Bd. 31, Nr. 5, 1. September 1995 (1995-09-01), Seiten 1096-1099, XP000535588, ISSN: 0093-9994, DOI: 10.1109/28.464524

## Beschreibung

Die Erfindung betrifft eine Schaltungsanordnung zum Laden von Fahrzeugbatterien in einem Fahrzeug, mit einem ersten, den Fahrzeugbatterien nachgeschalteten Inverter, an den erste in Stern geschaltete Wicklungen eines elektrischen Antriebsmotors angeschlossen sind, und der für den Ladebetrieb der Fahrzeugbatterien mit einem Drehstromnetz verbindbar ist.

Weiterhin betrifft die Erfindung ein entsprechendes Verfahren zum Laden von Fahrzeugbatterien in einem Fahrzeug.

Derartige Schaltungsanordnungen zum Laden von Fahrzeugbatterien in einem Fahrzeug sind z.B. aus der EP 0 603 778 A1, US 2010/013 438 A1, US 5 341 075 bzw. "AN INTEGRAL BATTERY CHARGER FOR FOUR-WHEEL DRIVE ELECTRIC VEHICLE", SUL S-K et al, IEEE TRANSACTIONS ON INDUSTRY APPLICATIONS, IEEE SERVICE CENTER, PISCATAWAY, NJ, US, Bd. 31, Nr. 5, 1. September 1995 (1995-09-01), Seiten 1096-1099, ISSN: 0093-9994, DOI: 10.1109/28.464524 bekannt. Hierbei werden der Inverter und die Wicklungen des Antriebsmotors zum Laden der Fahrzeugbatterien verwendet. Die dabei vom speisenden Netz aufgenommenen Oberschwingungsströme sind jedoch unzulässig hoch. Daher müssen entsprechende technische Maßnahmen getroffen werden, um den Oberschwingungsgehalt auf zulässige Werte zu reduzieren.

Der Erfindung liegt daher die Aufgabe zugrunde, eine Schaltungsanordnung zum Laden von Fahrzeugbatterien in einem Fahrzeug der oben genannten Art und ein entsprechendes Verfahren vorzuschlagen, wobei das Netz beim Lagevorgang möglichst wenig mit Oberschwingungen belastet wird und auf zusätzliche kostenaufwändige Komponenten mit großem Volumen und Gewicht verzichtet wird.

Die Aufgabe wird mit den Merkmalen nach Anspruch 1 gelöst.

Dabei ist ein zweiter, den Fahrzeugbatterien nachgeschalteter Inverter vorgesehen, an den zweite in Stern geschaltete Wicklungen des elektrischen Antriebsmotors angeschlossen sind, wobei die ersten und die zweiten Wicklungen einen gemeinsamen Sternpunkt aufweisen, der durch einen Schalter im geschlossenen Zustand gebildet ist, und der für den Ladebetrieb durch Öffnen des Schalters auftrennbar ist, wodurch die ersten und zweiten Wicklungen gemeinsam eine Drehstromdrossel zur Dämpfung von Oberschwingungen bilden.

Diese Schaltungsanordnung ist sowohl für den Fahrbetrieb als auch für den Ladebetrieb vorteilhaft anwendbar. Im Fahrbetrieb ist der Schalter geschlossen und die ersten und zweiten Wicklungen werden über den jeweiligen ersten und zweiten Inverter mit Strom gespeist. Für den Ladebetrieb wird der Schalter geöffnet und auf diese Weise der gemeinsame Sternpunkt der ersten und zweiten Wicklungen aufgetrennt. Hierdurch bilden die ersten und zweiten Wicklungen eine Drehstromdrossel, die die Belastung des Drehstromnetzes mit Oberschwingungen dämpft. In diesem Zustand haben die Ströme der ersten und zweiten Wicklungen in Bezug auf den aufgetrennten Sternpunkt eine gegensinnige Richtung. Hierbei ist der Stromfluss im Gegensatz zum Fahrbetrieb, in dem die Ströme in den ersten und zweiten Wicklungen in Richtung des Sternpunkts fließen, in den ersten Wicklungen zum aufgetrennten Sternpunkt gerichtet, während er in den zweiten Wicklungen vom aufgetrennten Sternpunkt weggerichtet ist, wobei die ersten und zweiten Wicklungen von demselben Strom durchflossen werden. Dies hat zur Folge, dass im Ladebetrieb zwei entgegengesetzte, d.h. sich aufhebende Drehmomente auf den Antriebsmotor wirken und dieser im Stillstand verharrt.

Vorteilhafte Weiterbildungen der Erfindung sind den Unteransprüchen zu entnehmen.

Besonders vorteilhaft ist es, wenn der zweite Inverter gemäß Anspruch 2 im Ladebetrieb deaktiviert ist, da er hierfür nicht benötigt wird und in diesem Fall keine Verluste verursacht.

Ist der gemeinsame Sternpunkt der ersten und zweiten Wicklungen gemäß Anspruch 3 bei Ausfall des ersten oder zweiten Inverters durch den Schalter auftrennbar, lässt sich auf diese Weise der Antriebsmotor vorteilhaft momentfrei schalten.

Die das Verfahren zum Laden von Fahrzeugbatterien in einem Fahrzeug betreffende Aufgabe wird mit Verfahrensschritten nach Anspruch 4 gelöst, die den Lösungsmerkmalen für die erfindungsgemäße Schaltanordnung entsprechen.

Ein Ausführungsbeispiel der Erfindung wird im Folgenden anhand einer Zeichnung näher erläutert.

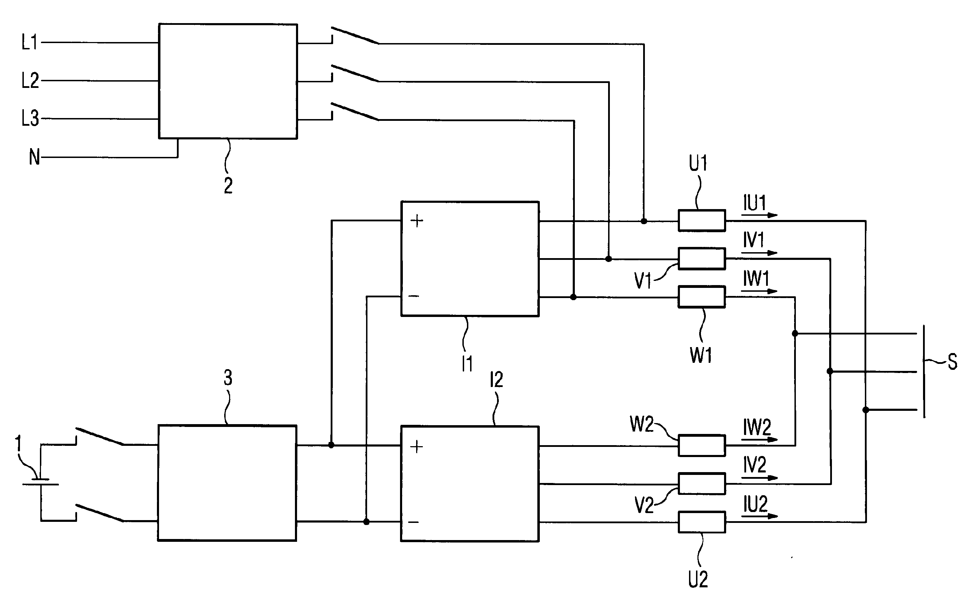

Die Zeichnung zeigt eine erfindungsgemäße Schaltungsanordnung zum Laden von Fahrzeugbatterien 1 in einem Fahrzeug. Der besondere Vorteil dieser Schaltungsanordnung besteht darin, dass sie nicht nur für den Ladebetrieb, sondern auch für den Fahrbetrieb anwendbar ist.

Für den Fahrbetrieb ist ein elektrischer Antriebsmotor mit ersten U1,V1,W1 und zweiten Wicklungen U2,V2,W2 vorgesehen. Diese sind mit einem Schalter S verbunden, durch den je nach Schaltstellung ein gemeinsamer auftrennbarer Sternpunkt gebildet wird. Die ersten Wicklungen U1,V1,W1 sind an einen ersten Inverter I1 und die zweiten Wicklungen U2,V2,W2 an einen zweiten Inverter I2 angeschlossen. Über diese werden im Fahrbetrieb die ersten U1,V1,W1 und zweiten Wicklungen U2,V2, W2 von den Fahrzeugbatterien 1 gespeist, d.h. es fließen die Phasenströme IU1,IV1,IW1 bzw. IU2,IV2,IW2 zu dem gemeinsamen Sternpunkt, der durch den geschlossenen Schalter S gebildet ist.

Für den Ladebetrieb ist die Drehstromseite des ersten Inverters I1 über ein Drehstromfilter 2 an das Drehstromnetz L1, l2,l3,N anschließbar. Im Ladebetrieb ist der Schalter S geöffnet, d.h. der gemeinsame Sternpunkt ist aufgetrennt und die ersten U1,V1,W1 und zweiten Wicklungen U2,V2,W2 bilden somit eine Drehstromdrossel, durch die die Belastung des Drehstromnetzes L1,l2,l3,N mit Oberschwingungen verringert wird. Der Inverter I2 wird für den Ladebetrieb nicht benötigt und daher deaktiviert.

Der Inverter I1 wird nun als dreiphasiger PFC (PowerFaktor-Controller) betrieben. Dazu wird die Ausgangsspannung des Inverters I1 auf die Netzspannung synchronisiert und in Amplitude und Phase von einem Regler so eingestellt, dass die Phasenströme sinusförmig sind und der DC-Strom im Gleichspannungszwischenkreis gleich dem von der Batterie benötigtem Ladestrom ist.

Im Ladebetrieb sind die Phasenströme IU1,IV1,IW1 in den entsprechenden Wicklungen U1,V1,W1 zum aufgetrennten Sternpunkt gerichtet, während die Phasenströme IU2,IV2;IW2 in den zweiten Wicklungen U2,V2,W2 vom aufgetrennten Sternpunkt weggerichtet sind.

Dabei werden die ersten U1,V1,W1 und zweiten Wicklungen U2, V2,W2 von demselben Strom durchflossen. Dies hat zur Folge, dass im Ladebetrieb zwei entgegengesetzte, d.h. sich aufhebende Drehmomente auf den Antriebsmotor wirken. Es tritt also kein resultierendes Drehmoment im Antriebsmotor auf.

Dieser Vorteil wird daher auch für den Fall genutzt, dass einer der beiden Inverter I1,I2 ausfällt. Durch Öffnen des Schalters S wird der Sternpunkt aufgetrennt und somit der Antriebsmotor momentfrei geschaltet.

Ein weiterer Vorteil dieser Schaltungsanordnung besteht darin, dass sie mit zwei Invertern I1,I2 der halben Leistung ausgeführt ist und dem entsprechend bei Ausfall eines der Inverter I1,I2 noch der Weiterbetrieb mit halber Leistung möglich ist.

Außerdem kommt diese Schaltungsanordnung ohne Umschalter aus, die den vollen Fahrstrom tragen müssen.

## Patentansprüche

1. Schaltungsanordnung zum Laden von Fahrzeugbatterien (1) in einem Fahrzeug, mit einem ersten den Fahrzeugbatterien (1) nachgeschalteten Inverter (I1), an den erste Wicklungen (U1,V1,W1) eines elektrischen Antriebsmotors angeschlossen sind, und der für den Ladebetrieb der Fahrzeugbatterien mit einem Drehstromnetz verbindbar ist, wobei ein zweiter den Fahrzeugbatterien nachgeschalteter Inverter (I2) vorgesehen ist, an den zweite Wicklungen (U2,V2,W2) des elektrischen Antriebsmotors angeschlossen sind, **dadurch gekennzeichnet, dass** eine Sternpunktbildung der ersten (U1,V1, W1) und zweiten Wicklungen (U2,V2,W2) durch einen Schalter (S) in einer ersten Position gegeben ist, wobei im Ladebetrieb durch den Schalter (S) in einer zweiten Position die ersten (U1,V1,W1) und zweiten Wicklungen (U2,V2,W2) in Reihe geschaltet sind und dabei der gemeinsame Sternpunkt der ersten (U1,V1,W1) und zweiten Wicklungen (U2,V2,W2) aufgetrennt ist und gemeinsam eine Drehstromdrossel zur Dämpfung von Oberschwingungen bilden.

2. Schaltungsanordnung nach Anspruch 1, **dadurch gekennzeichnet, dass** der zweite Inverter (I2) im Ladebetrieb deaktiviert ist.

3. Schaltungsanordnung nach Anspruch 1 oder 2, **dadurch gekennzeichnet, dass** der Sternpunkt der ersten (U1,V1,W1) und zweiten Wicklungen (U2,V2,W2) durch den Schalter (S) bei Ausfall des ersten (I1) oder zweiten Inverters (I2) auftrennbar ist.

4. Verfahren zum Laden von Fahrzeugbatterien in einem Fahrzeug mit einer Schaltungsanordnung nach Anspruch 1, **dadurch gekennzeichnet, dass**
- der Schalter (S) für den Fahrbetrieb in die erste Position gebracht wird, wodurch die ersten (U1,V1,W1) und zweiten (U2,V2,W2) Wicklungen einen gemeinsamen Sternpunkt aufweisen;
- der Schalter (S) für den Ladebetrieb in die zweite Position gebracht wird, wodurch mit den ersten (U1,V1,W1) und zweiten Wicklungen (U2,V2,W2) in Reihe geschaltet sind und dabei der gemeinsame Sternpunkt der ersten (U1,V1,W1) und zweiten Wicklungen (U2,V2,W2) aufgetrennt ist und gemeinsam eine Drehstromdrossel zur Dämpfung von Oberschwingungen gebildet wird.

5. Verfahren nach Anspruch 4, **dadurch gekennzeichnet, dass** für den Ladebetrieb der zweite Inverter (I2) deaktiviert wird.

6. Verfahren nach Anspruch 4 oder 5, **dadurch gekennzeichnet, dass** der Schalter (S) bei Ausfall des ersten (I1) oder zweiten Inverters (I2) geöffnet wird, d.h. der Sternpunkt aufgetrennt wird.

## Claims

1. Circuit arrangement for the charging of vehicle batteries (1) in a vehicle, with a first inverter (I1) connected downstream of the vehicle batteries (1), to which first windings (U1, V1, W1) of an electrical drive motor are connected, and which is able to be connected to an alternating current network for the charging mode of the vehicle batteries, wherein a second inverter (I2) connected downstream of the vehicle batteries is provided, to which second windings (U2, V2, W2) of the electrical drive motor are connected, **characterised in that** a star point formation of the first (U1, V1, W1) and second windings (U2, V2, W2) is provided by a switch (S) in a first position, wherein in charging mode, the first (U1, V1, W1) and second windings (U2, V2, W2) are connected in series by the switch (S) in a second position and when this is done the common star point of the first (U1, V1, W1) and second windings (U2, V2, W2) is disconnected and together the windings form an alternating current choke for damping harmonics.

2. Circuit arrangement according to claim 1, **characterised in that** the second inverter (I2) is deactivated in charging operation.

3. Circuit arrangement according to claim 1 or 2, **characterised in that** the star point of the first (U1, V1, W1) and second windings (U2, V2, W2) is able to be disconnected by the second switch (S) on failure of the first (I1) or second inverter (I2).

4. Method for the charging of vehicle batteries in a vehicle with a circuit arrangement according to claim 1, **characterised in that**
- for driving, the switch (S) is put into the first position, through which the first (U1, V1, W1) and second (U2, V2, W2) windings have a common star point;
- for charging, the switch (S) is put into the second position, through which the first (U1, V1, W1) and second windings (U2, V2, W2) are connected in series and when this is done the common star point of the first (U1, V1, W1) and second windings (U2, V2, W2) is separated and together an alternating current choke for damping harmonics is formed.

5. Method according to claim 4, **characterised in that** the second inverter (I2) is deactivated for the charging operation.

6. Method according to claim 4 or 5, **characterised in that** the switch (S) is opened on failure of the first (I1) or second inverter (I2), i.e. the star point is disconnected.

## Revendications

1. Montage de chargement de batteries (1) dans un véhicule, comprenant un premier onduleur (I1) qui est monté en aval des batteries (1) du véhicule, auquel des premiers enroulements (U1, V1, W1) d'un moteur d'entraînement électrique sont raccordés et qui, pour le fonctionnement de charge des batteries du véhicule, peut être relié à un réseau de courant triphasé, dans lequel il est prévu un deuxième onduleur (I2) qui est monté en aval des batteries du véhicule et auquel des deuxièmes enroulements (U2, V2, W2) du moteur d'entraînement électrique sont raccordés, **caractérisé en ce qu'**une formation de point neutre des premiers (U1, V1, W1) et des deuxièmes enroulements (U2, V2, W2) est donnée par un commutateur (S) dans une première position, dans lequel en fonctionnement de charge, les premiers (U1, V1, W1) et deuxièmes enroulements (U2, V2, W2) sont montés en série par le commutateur (S) dans une deuxième position et ainsi le point neutre commun des premiers (U1, V1, W1) et deuxièmes enroulements (U2, V2, W2) est séparé et ils forment en commun une bobine de self en courant triphasé pour l'amortissement des harmoniques.

2. Montage suivant la revendication 1, **caractérisé en ce que** le deuxième onduleur (I2) est désactivé en fonctionnement de charge.

3. Montage suivant la revendication 1 ou 2, **caractérisé en ce que** le point neutre des premiers (U1, V1, W1) et deuxièmes enroulements (U2, V2, W2) peut être séparé par le commutateur (S) si le premier (I1) ou le deuxième inverseur (I2) est défaillant.

4. Procédé de charge de batteries dans un véhicule par un montage suivant la revendication 1, **caractérisé en ce que**
- on met le commutateur (S) pour le fonctionnement en marche dans la première position, les premiers (U1, V1, W1) et deuxièmes enroulements (U2, V2, W2) ayant un point neutre commun ;
- on met le commutateur (S) pour le fonctionnement de charge dans la deuxième position, grâce à quoi les premiers (U1, V1, W1) et deuxièmes enroulements (U2, V2, W2) sont montés en série et ainsi le point neutre commun des premiers (U1, V1, W1) et deuxièmes enroulements (U2, V2, W2) est séparé et il est formé conjointement une self de courant triphasé pour l'amortissement des harmoniques.

5. Procédé suivant la revendication 4, **caractérisé en ce que** pour le fonctionnement de charge on désactive le deuxième onduleur (I2).

6. Procédé suivant la revendication 4 ou 5, **caractérisé en ce que** l'on ouvre le commutateur (S) si le premier (I1) ou le deuxième onduleur (I2) est défaillant, c'est-à-dire que l'on sépare le point neutre.
